# EUROPEAN PATENT APPLICATION

(11) **EP 3 991 864 A1**
(43) Date of publication of application: **04.05.2022**
(21) Application number: 20204590.2
(22) Date of filing: 29.10.2020
(51) Int. Cl.: B09B 3/00, B65D 65/46, C05F 9/04, C08J 5/10, C08K 3/26, C08K 9/04, C08K 9/08, C08L 3/00, C08L 67/04

(54) **BIODEGRADABLE AND COMPOSTABLE COMPOSITION FOR USE AS AN AGRICULTURAL FILM**

(71) Applicant: Gaia Holding AB, 253 68 Helsingborg (SE)
(72) Inventor: Rosén, Åke, 254 54 Helsingborg (SE)
(74) Representative: AWA Sweden AB

(57) **Abstract**

The present invention concerns a biodegradable and compostable composition comprising i) 15-50 % by weight of at least one biodegradable and/or decayable aromatic and/or aliphatic ester; ii) 20-55 % by weight of calcium carbonate and/or dolomite particles having a polished surface; iii) 15-40 % by weight of starch of vegetable origin; iv) 1-5 % by weight of at least one oil of vegetable origin; v) 0-1 % by weight of at least one UV-stabilizer; and vi) 0-1 % by weight of at least one pigment additive.

## Description

### Technical field of the invention

The present invention relates to a biodegradable and compostable composition having a unique composition of different components providing a composition that it is fully biodegradable and fully compostable after decomposition. The present invention further relates to a method for manufacturing said biodegradable and compostable composition into an agricultural film. The present invention further relates to use of the biodegradable and compostable composition in the preparation of an agricultural film, and to the agricultural film as such.

### Technical Background

The use of fossil based plastic materials has during late time been more and more questioned, especially when used in such products that might come in contact with earth and water. The conventional raw material for the commonly used plastic polyethene (PE) is petroleum or natural gas. This raw material is not renewable, it is not degradable and during combustion it releases methane gas. To overcome some of this, PE has instead been produced from sugar canes. However, even if sugar canes being a renewable raw material, it still releases methane gas during combustion and it is not degradable. Further, sugar canes are produced in Brazil, leading to long transport of the material, and during production, sugar canes demand large amount of water.

Within agriculture, agricultural films are used to cover the crops. The film prevents the crops from being harmed by animals and insects, but also to store heat around the crops to promote growth. Today, the films are commonly made from PE or PLA. When using agricultural films, the film covers the fields for 3-12 months before it is plowed down in the field while harvesting the crops. Using films based on plastics such as PE gives a negative drawback on the environment since the pieces of film plowed down in the fields and ending up in the soil do not decompose. In addition, the release of microplastics severely effects the grounds, water and crops that grow on the field.

The use of plastics in many products has led to the release of small plastic components, called micro plastics, into the ground and water. Micro plastics have been found all over the globe and it is today not known what environmental effects the large distribution can have.

From both governments and public there is a large demand for better material to use in disposable products such as agricultural films. The material used must be made to a large extent of renewable sources, be biodegradable and compostable. One such material commonly used is polylactic acid (PLA) produced from starch. However, this material comes with some drawbacks some of them being that the temperature for decomposition is 70 ºC, but the softening temperature is 50 ºC. This gives drawbacks during decomposition, since a high temperature is needed to initiate the process, while at the same time the products softens at 50 ºC, which restrains the product from being used in environments with temperatures above 50 ºC.

CN109762308 discloses a herbicidial biodegradable agricultural film containing 30-80 parts polyadipate/butylene terephtalate, 0-30 parts polylactid acid, 10-70 parts papermaking waste, 0-30 parts starch and 0.5-15 parts of auxiliary agent.

Thus, there is a need for developing new materials for substituting plastics in many different areas, such as when used in a disposable agricultural film.

### Summary of the invention

One object of the present invention is to provide a composition suitable for replacing plastic based agricultural films, which composition is made from renewable resources, which is biodegradable, compostable, and which does not leave micro plastics.

One object of the present invention is to provide a composition which enriches the field during harvesting.

A further objective of the present invention is to provide a method for preparing said composition.

The present invention concerns a composition suitable for replacing plastic based agricultural films, which composition is biodegradable, compostable and does not leave micro plastics. According to the invention, the composition comprises: (i) 15-50 % by weight of at least one biodegradable and/or decayable aromatic and/or aliphatic ester; (ii) 20-55 % by weight of calcium carbonate and/or dolomite particles having a polished surface; (iii) 15-40 % by weight of starch of vegetable origin; (iv) 1-5 % by weight of at least one oil of vegetable origin; (v) 0-1 % by weight of at least one UV-stabilizer; and (vi) 1-5 % by weight of at least one pigment additive.

Hereby an improved composition suitable for replacing PE- or PLA-based plastic compositions used in agricultural films is provided, which does not leave microplastics and which is biodegradable and compostable.

In one embodiment of the present invention, the calcium carbonate particles are chosen from dolomite, marble, limestone particles and/or a mixture thereof. Calcium carbonate, dolomite, marble and limestone are constantly renewed in the ground. During decaying, it will again return to the soil and act as a soil improvement agent. The use of calcium carbonate, dolomite, marble and/or limestone particles provides the agricultural film with an ability to enrich the grounds where it is used. During harvesting, the films are plowed down into the ground or soil and the calcium carbonate, dolomite, marble and/or limestone enriches the grounds with minerals. Thus, the film gives even after use a positive, enriching effect on the ground.

The calcium carbonate, dolomite, marble and/or limestone particles according to the present invention have preferably a polished surface, such that substantially no sharp edges remain on the surface of the particles. Removing substantially all the sharp edges of the particles will decrease the risk of tears of the film.

In one embodiment of the present invention, the calcium carbonate and/or dolomite particles may be pre-treated with said at least one oil of vegetable origin. The pre-treatment of calcium carbonate and/or dolomite particles having a polished surface, with at least one oil of vegetable origin will lead to that the calcium carbonate and/or dolomite particles act as a lubricant, leading to decrease of the tear of the machines used in the production of the composition.

In one embodiment of the present invention the calcium carbonate and/or dolomite particles may have a particle size of about 2-4 µm.

The at least one oil of vegetable origin is used to improve the manufacture of the composition into for instance granules. The at least one oil of vegetable origin is used as a pre-treatment to the calcium carbonate, dolomite, marble and/or limestone particles, making them act as a lubricant in the composition. Thereby decreasing the tear of the machines used to manufacture for instance granules comprising the composition as defined herein. The at least one oil of vegetable origin will be absorbed within the composition during manufacture. The absorption of the oil will prevent and block absorption of other components such as water. Further, the use of at least one oil of vegetable origin will act as a coupling agent in the composition leading to a low permeability compared to plastics.

The use of starch of vegetable origin will make the composition non-elastic, making it stronger and more durable. Moreover, the use of starch makes it possible to reduce the amount of aromatic and/or aliphatic ester in the composition.

In one embodiment of the present invention the starch of vegetable origin may have a particle size of 4-10 µm, such as 4-7µm. The starch may be chosen from at least one of wheat, oat, rye, tapioca and barley or from any other suitable vegetable starch source such as potato, maize or from any other starch source available. The use of starch will give the composition characteristics such that further processing of the granules made thereof will provide a materiel being non-elastic making the material more durable.

The use of at least one UV-stabilizer in the composition will increase the lifetime of the agricultural film. The dosage of the UV-stabilizer can be customized to the growing season of the crops, ensuring that the film will not break down before the harvesting but further ensuring that it will break down during harvesting.

The at least one pigment additive in the composition may be iron oxide or carbon black. The use of at least one pigment additive in the composition gives the agricultural film a black color. The black color allows the heat from the sun to be stored under the film, which promotes and improves the growth of the crops.

The invention also concerns a method for preparing a biodegradable and compostable composition, such as granules. According to the invention the method comprises: (a) polishing particles of calcium carbonate and/or dolomite to remove sharp edges on the surface; (b) mixing said polished particles, with at least one oil of vegetable origin to provide a non-sticky mixture; (c) heat mixing a composition comprising (i) at least one biodegradable and/or decayable aromatic and/or aliphatic ester; (ii) starch of vegetable origin chosen; (iii) at least one UV-stabilizer; and (iv) at least one pigment additive; thereafter, during continued mixing, (d) adding said non-sticky mixture of step (b) to said heat mixed base composition; (e) extruding the mixture of step (d) into granules of said composition.

In one embodiment of the method according to the present invention, the mixing in step (d) and extrusion in step (e) may be performed under controlled pressure and heating. The pressure may be below 300 bar and the temperature may be between 150 and 200 ºC.

The film manufactured using the method of the present invention may have a thickness of 5-20 µm, eg 10-15 µm, such as 10-12 µm. The film may be produced in a width of up to about 30 meters.

The invention also concerns a method for preparing a biodegradable and compostable agricultural film, wherein the composition as described herein or the composition prepared according to the method as described herein is subjected to blow molding into a film.

Further, the invention also concerns an agricultural film prepared from the composition as described herein.

Decomposition of a composition according to the present invention may be initiated at 30-35 ºC if it is present under compostable conditions with bacteria present. The decomposition may be completed within two months when nothing more than earth remains. As compared to compositions containing PLA where the decomposition requires 70 ºC to be initiated, which makes higher demand on the facilities handling the decomposition. By addition of UV-stabilizer in the composition, it is ensured that the decomposition will not be initiated when the agricultural film comprising the composition is used on an outdoor field. This ensures that the film of the invention can be used for one entire growth season of different crops without starting to decompose. This time can be from 3 months up to 12 months and the dosage of the UV-stabilizer can be optimized for the length of the growth season. However, when the film of the invention at the harvesting season is cut into pieces during harvesting the film will be fully decomposed after some time without leaving toxic residues such as microplastics in the ground.

By using the composition of the present invention, the carbon dioxide (CO₂) emission is reduced up to 80%. From a life cycle analysis, it has been concluded that for each 6 tons of fossil plastics which is replaced by a material of the invention 6.6 tons of carbon dioxide emission can be saved. This is in line with goals to reduce global warming.

### Definitions

The term "dolomite" means the mineral CaMg(CO₃)₂ or a commercially available product which is won from a natural occurring dolomite deposit or which is sold as "dolomite".

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a composition suitable for replacing plastics for use as an agricultural film which is biodegradable, compostable, and which does not leave micro plastics in the ground or water during or after use.

The biodegradable and compostable composition suitable for replacing plastics in agricultural films according to the present invention thus comprises
(i) 15-50 % by weight of at least one biodegradable and/or decayable aromatic and/or aliphatic ester;
(ii) 20-55 % by weight of calcium carbonate particles having a polished surface;
(iii) 15-40 % by weight of starch of vegetable origin;
(iv) 1-5 % by weight of at least one oil of vegetable origin;
(v) 0-1 % by weight of at least one UV-stabilizer;
(vi) 1-5% by weight of pigment additive.

In one embodiment of the present invention, said composition comprises 43 % by weight of PBAT, 10 % by weight of PBS, 23 % by weight of dolomite, 20 % by weight of tapioca, 2 % by weight of rape seed oil and 5 % by weight of iron oxide.

In one embodiment of the present invention the biodegradable and/or decayable aromatic and/or aliphatic ester may be a polybutylene adipate terephthalate (PBAT), a random copolymer produced from adipic acid, 1,4-butanediol, and terephthalic acid. Any other aromatic ester with similar properties as PBAT may be used. In another embodiment, the biodegradable and/or decayable aromatic and/or aliphatic ester may be polybutylene succinate (PBS). Polybutylene succinate being a fossil-free renewable polyester synthesized from 1,4-butane diol and succinic acid. Any other aliphatic polyester having similar properties as polybutylene succinate may be used. PBS is an ester which is more viscous than PBAT, giving the final composition a longer life time. In another embodiment, the aliphatic ester, e.g. aliphatic polyester, may be polybutyl acrylate. Polybutyl acrylate (PBA) being synthesized e.g. from acetylene, 1-butyl alcohol, carbon monoxide, nickel carbonyl, and hydrochloric acid. PBA consists of polymerized units of butyl acrylate, with repeating (C₇H₁₂O₂) units. In yet another embodiment, the biodegradable and/or decayable aromatic and/or aliphatic ester may be polyhydroxy butyrate (PHB). In one embodiment, the PHB may be poly-3-hydroxybutyrate (P3HB). In yet another embodiment the PHB may be poly-4-hydroxybutyrate (P4HB). Polyhydroxy butyrate is a polyhydroxyalkanoate (PHA), a polymer belonging to the polyesters class that are of interest as bio-derived and biodegradable. Polyhydroxyalkanoates or PHAs are polyesters produced in nature by numerous microorganisms. When produced by bacteria they serve as both a source of energy and as a carbon store. More than 150 different monomers can be combined within this family to give materials with extremely different properties. These materials are biodegradable and are used in the production of bioplastics. PHB is a compostable and biodegradable polyester and derived from renewable sources as it is produced by microorganisms as a response to physiological stress. Using polyhydroxyl butyrate allows for degradation of the end product in water. Any other aliphatic polyester having similar properties as polybutylene succinate, polybutyl acrylate or polyhydroxy butyrate may be used.

In yet another embodiment of the present invention, the biodegradable and/or decayable aromatic and/or aliphatic ester may be poly (butylene succinate-co-butylene) terephthalate (PBST). PBST is a biodegradable polyester synthesized from dimethyl succinate and/or dimethyl terephthalate and 1,4-butanediol. The at least one biodegradable and/or decayable aromatic and/or aliphatic ester may be a mixture of any of the examples or any other similar biodegradable and/or decayable aromatic and/or aliphatic ester. The at least one biodegradable and/or decayable aromatic and/or aliphatic ester constitute 15-50 % by weight of the composition. For example, 15-20 %, 20-30 %, 30-40 % or 40-50 % by weight of the composition, for instance 5, 10, 15, 20, 25, 30, 35 or 30 % by weight of the composition. The composition constitutes for example 40 % by weight of at least one aromatic ester and 10 % by weight of an aliphatic ester biodegradable and/or decayable aromatic and/or as is described in the experimental part.

In one embodiment of the present invention the calcium carbonate particles may be dolomite particles, marble particles or limestone particles. Calcium carbonate, dolomite, marble and limestone are materials acquired from the soil, where it originates from minerals. Said particles may have a polished surface, where all sharp edges have been removed on the particles, and a surface is produced which is smooth without any sharp corners. The particles constitute 20-55 % by weight. For example, 20-25 %, 25-30 %, 30-35 %, 35-40 %, 40-45 %, 45-50 % or 50-55 % by weight of the composition. In one embodiment the particles constitute 23 % by weight of the composition.

Further, according to one embodiment of the present invention, said particles may have a size of about 2-4 µm.

According to one embodiment of the present invention, said particles may be pre-treated with at least one oil of vegetable origin as to reach saturation. The mix of the particles and the oil lead to that the particles act as a lubricant, which decreases the tear of the machines used.

The composition may in one embodiment according to the invention include starch of a vegetable origin, said starch being chosen from at least one of wheat, oat, rye and barley, where said starch having a particle size of 4-10 µm, such as 4-7 µm, for instance around 1, 2, 3, 4, 5, 6, 7, 8, 9 or 10 µm. The starch as used in the invention may originate from any vegetable source and not limited to the examples as disclosed herein. The starch of vegetable origin constitutes 15-40 % by weight of the composition. For example, 15-20 %, 20-25 %, 25-30 %, 30-35 % or 35-40 % by weight. The composition constitutes for example of 20 % by weight of starch. The addition of starch gives the composition characteristics such that further processing of the granules that may be made thereof will provide a material being non-elastic making said material more durable. In one further embodiment according to the invention, the starch being pre-treated with at least one oil of vegetable origin erasing water from the starch, increasing the firmness of the composition.

In one embodiment, the composition according to the invention may include at least one oil of vegetable origin. The oil may be rape seed oil or any vegetable oil with similar characteristics. Suitably, a vegetable oil is used which is available in the vicinity of the manufacturing site of the granules in order to minimize transportation of the oil, leading to less impact on the environment. In northern Europe rape seed oil could be a beneficial choice. In southern Europe olive oil could be a suitable choice. The at least one oil of vegetable origin constitute 1-5 % by weight of the composition. For example, 1-3 % by weight or 3-5 % by weight. The at least one oil of vegetable origin may for example constitute 2 % by weight of the composition.

In one embodiment, the composition according to the present invention may include at least one UV-stabilizer (ultra violet stabilizer). In one embodiment, the at least one UV-stabilizer may be UV-5411. UV-5411 is comprised in the hydroxyphenyl benzotriazole class. It has a molecular formula of C₂₀H₂₅N₃O. Any other UV-stabilizer having similar properties as UV-5411 may be used. The use of a UV-stabilizer pro-longs the durability of the composition when used in an outdoor field under long impact of sun light. Since the composition has such good qualities regarding biodegradability, the use of UV-stabilizer ensures that the granules comprising the composition of the invention may be used for one year before it can be fully decomposed as described below. The UV-stabilizer constitute 0.5-1 % by weight of the composition. The composition constitutes for example 0 % by weight of at least one UV-stabilizer as is described in the experimental part.

In one embodiment, the composition according to the present invention may include at least one pigment additive. The pigment additive may be iron oxide or carbon black. Any other black pigment additive might be used. The use of at least one pigment additive provides the invention with a dark color, making it more suitable as an agricultural film since it preserves the heat from the sun under the film. The pigment additive constitutes 1-5 % by weight of the composition. The composition constitutes for example 5 % by weight of the at least one pigment additive.

In a compost container, the formation of methane gas requires 30-35 ºC to start. The methane gas further increases the growth of bacteria, which starts the decaying process. If the granules of the invention would end up in a compost container the decaying process would start around 30-35 ºC, while bioplastic compositions comprising PLA according to prior art require a temperature of 70 ºC for the decomposition to start. During decaying process of the granules or compositions according to the present invention, some of the granules or compositions will decay and may give rise to biogas, and the remaining within the digested sludge will be spread out on the fields. Calcium carbonate and/or dolomite will not influence the decaying process but will act as soil improvement agent out on the fields as it will neutralize the pH, which is favorable for soil. The calcium carbonate and/or dolomite will for instance provide the soil with growth factors such as calcium and magnesium and other important minerals. Limestone may also be used to provide the soil with growth factors such as minerals. It is a carbonate sedimentary rock that is often composed of the skeletal fragments of marine organisms. Its major materials are the minerals calcite and aragonite, which are different crystal forms of calcium carbonate (CaCO₃).

Marble may also be used to provide the soil with growth factors such as minerals. It is a metamorphic rock composed of recrystallized carbonate minerals, most commonly calcite or dolomite.

The problem with the use of plastic material from fossil sources, or from raw material which does not degrade in nature are getting increased attention from governments as well as the public. The use of plastics in products giving rise to micro plastics in soil and water has also gained interest during later years. The composition of the present invention is fully biodegradable and compostable, without being a source of micro plastics. The calcium carbonate and dolomite are neutral components within the composition, as it returns back to the nature in the same form as it is withdrawn from the nature. The oil according to the present invention come from vegetable origin, which is a renewable raw material, while the aromatic esters available on the market as of today mostly is from non-renewable raw material, but also from partly renewable and fully degradable sources, such as PBAT disclosed above. The composition according to the present invention may only comprise 6-30 % of non-renewable raw material.

From the composition according to the present invention agricultural films manufactured according to the method according to the present invention is provided. In the use as an agricultural film, the composition has advantages for this use such that it does not release micro plastics to the surrounding environment, it does not include substances being toxic to nature or humans, and it does not soften even during higher air temperatures.

The present invention further concerns a method for preparing a biodegradable and compostable composition, according to above. The method according to the present invention comprises:
(a) polishing particles of dolomite to remove sharp edges on the surface;
(b) mixing said polished particles, with at least one oil of vegetable origin to provide a non-sticky mixture;
(c) heat mixing a composition comprising (i) at least one biodegradable and/or decayable aromatic and/or aliphatic ester; (ii) starch of vegetable; (iii) optionally at least one UV-stabilizer and (iv) at least one pigment additive; thereafter, during continued mixing,
(d) adding said non-sticky mixture of step (b) to said heat mixed base composition;
(e) extruding the mixture of step (d) into granules of said composition.

In one embodiment of the present invention, the method steps (d) and (e) is performed under controlled pressure and heating.

The controlled pressure may be below 300 bar, for instance 100-200 bar depending on the temperature. The controlled temperature may be 150-200 ºC.

The invention also concerns a method for preparing a biodegradable and compostable agricultural film, wherein the composition as disclosed herein or the composition prepared as disclosed herein is subjected to blow molding into a film.

Further, the invention also concerns an agricultural film prepared from the composition as disclosed herein.

The film manufactured using the method of the present invention may be around 5-15 µm, eg 10-12 µm thick. The film may be produced in a width of up to around 30 meters.

### EXAMPLES

By way of examples, and not limitation, the following examples identify a variety of compositions pursuant to the embodiments of the present invention.

### Experiment 1

In the first experiment dolomite particles, in a concentration of 23 % by weight of the calculated final composition, were polished to acquire smooth edges. Next, the particles were mixed with 2 % by weight of rapeseed oil to saturate the particles. The result of the mixing was a non-sticky mixture working as a lubricant in the further processing steps.

In parallel, 40 % by weight of PBAT was mixed with 10 % by weight of PBS, 20 % by weight of tapioca and 5 % by weight of iron oxide during heating to 150 °C under a pressure of 225 bar. The mixing was performed in an extruder and the lubricant mixture from the first step was added to the extruder.

Using the extruder, the composition was pushed out of the extruder and cut into granules. The total weight of the composition was 5000 ton. The granules were further processed by blow molding into a 30 meter wide and 12 µm thick film, The film was later used as an agricultural film.

### Experiment 2

In the second experiment calcium carbonate particles, in a concentration of 23 % by weight of the calculated final composition, were polished to acquire smooth edges. Next, the particles were mixed with 2 % by weight of rapeseed oil to saturate the particles. The result of the mixing was a non-sticky mixture working as a lubricant in the further processing steps.

In parallel, 50 % by weight of poly (butylene succinate-co-butylene) terephthalate (PBST), 20 % by weight of starch from rye and 5 % by weight of iron oxide during heating to 150 °C under a pressure of 225 bar. The mixing was performed in an extruder and the lubricant mixture from the first step was added to the extruder.

Using the extruder, the composition was pushed out of the extruder and cut into granules. The total weight of the composition was 5000 ton. The granules were further processed by blow molding into a 30 meter wide and 12 µm thick film, The film was later used as an agricultural film.

## Claims

1. A biodegradable and compostable composition comprising:
(i) 15-50 % by weight of at least one biodegradable and/or decayable aromatic and/or aliphatic ester;
(ii) 20-55 % by weight of calcium carbonate and/or dolomite particles having a polished surface;
(iii) 15-40 % by weight of starch of vegetable origin;
(iv) 1-5 % by weight of at least one oil of vegetable origin;
(v) 0-1 % by weight of at least one UV-stabilizer;
(vi) 1-5 % by weight of at least one pigment additive.

2. A composition according to claim 1, wherein said calcium carbonate particles have been pre-treated with said at least one oil of vegetable origin.

3. A composition according to claim 1 or 2, wherein said calcium carbonate and/or dolomite particles have a particle size of 2-4 µm.

4. A composition according to any one of claims 1-3 wherein said starch of vegetable origin having a particle size of 4-10 µm.

5. A composition according to any one of claims 1-4, wherein said starch of vegetable origin has been pre-treated with at least one oil of vegetable origin.

6. A method for preparing a biodegradable and compostable composition, such as granules, according to claim 1, which method comprises
(a) polishing particles of calcium carbonate and/or dolomite to remove sharp edges on the surface;
(b) mixing said polished particles, with at least one oil of vegetable origin to provide a non-sticky mixture;
(c) heat mixing a composition comprising (i) at least one biodegradable and/or decayable aromatic and/or aliphatic ester; (ii) starch of vegetable origin; (iii) at least one UV-stabilizer; and (iv) at least one pigment additive; thereafter, during continued mixing,
(d) adding said non-sticky mixture of step (b) to said heat mixed base composition;
(e) extruding the mixture of step (d) into granules of said composition.

7. A method for preparation of a composition according to claim 6, wherein the mixing in step (d) and extrusion in step (e) is performed under controlled pressure and heating.

8. A method for preparation of a composition according to claim 6 or 7, wherein the mixing in step (d) and extrusion in step (e) is performed at a pressure below 300 bar.

9. A method for preparation of a composition according to claim 6, 7, or 8, wherein the mixing in step (d) and extrusion in step (e) is performed at a temperature from 150 to 200 ºC.

10. A method for preparing a biodegradable and compostable agricultural film, wherein the composition according to any one of claims 1-5 or the composition prepared according to any one of claims 6-9 is subjected to blow molding into a film.

11. Agricultural film prepared from the composition of any one of claims 1-5.

12. Agricultural film according to claim 11, having a thickness of 5-25 µm, preferably 10-15 µm.
